# EUROPÄISCHE PATENTSCHRIFT

(11) **EP 0 496 432 B1**
(45) Veröffentlichungstag und Bekanntmachung des Hinweises auf die Patenterteilung: **31.08.1994**
(21) Anmeldenummer: 92103175.3
(22) Anmeldetag: 18.05.1988
(51) Int. Cl.: B01D 53/34, C04B 2/06, B01J 20/20

(54) **Verfahren zur Reinigung von Gasen und Abgasen**
Process for cleaning gases and exhaust gases
Procédé pour purifier des gaz et des gaz d'echappement

(30) Priorität: 18.05.1987 DE 3716566; 10.05.1988 DE 3815982; 16.05.1988 DE 3816595
(43) Veröffentlichungstag der Anmeldung: 29.07.1992
(62) Teilanmeldung aus: 88904222.2
(73) Patentinhaber: FTU GMBH, D-82319 Starnberg (DE)
(72) Erfinder: Suchenwirth, Hermann, Dr. Dipl.-Chem., W-8082 Grafrath (DE)
(74) Vertreter: Huber, Bernhard, Dipl.-Chem.

(56) Entgegenhaltungen:
- EP-A- 289 810
- EP-A- 301 272
- EP-A- 0 121 339
- WO-A-85/02453
- DE-A- 1 769 459
- DE-A- 2 904 312
- DE-A- 2 948 305
- DE-A- 3 400 764

## Beschreibung

Die Erfindung betrifft die Verwendung von feinpulvrigem Calciumhydroxid, das oberflächenaktive Substanzen enthält, für die Gas- und Abgasreinigung.

Auf dem Gebiet der Abgasreinigung kommen zahlreiche Verfahren zur Anwendung. Neben der nassen Abgasreinigung kommt auch die trockene Abgasreinigung zum Einsatz. Sie besteht darin, in den zu reinigenden Abgasstrom pulverförmiges Calciumhydroxid einzublasen. Ziel ist, die im Abgasstrom vorhandenen sauren Schadstoffe, wie Schwefeldioxid, Chlorwasserstoff und Fluorwasserstoff zu neutralisieren und die gebildeten Neutralsalze an geeigneten Abscheidevorrichtungen, zum Beispiel Elektrofiltern und Gewebefiltern, abzuscheiden.

Die trockene Abgasreinigung wird in verschiedenen Varianten angewandt. Die wesentlichsten Einsatzgebiete sind die Reinigung der Abgase aus Kohle- und Braunkohlekraftwerken, Müllverbrennungsanlagen, Sondermüllverbrennungsanlagen und Feuerungsanlagen mit unterschiedlichstem Einsatzmaterial.

Mit Hilfe der trockenen Abgasreinigung lassen sich die schadstoffhaltigen Abgase weitestgehend reinigen. Von Nachteil ist jedoch, daß der Verbrauch an Calciumhydroxid sehr hoch ist. Im allgemeinen beträgt der stöchiometrische Faktor 3,5 - 6. So werden z.B. bei Abfallverbrennungsanlagen anstelle der erforderlichen 10 - 12 kg Hydroxid/Tonne Abfall durchwegs mehr als 30 kg Calciumhydroxid/Tonne Abfall benötigt. Der mäßige Wirkungsgrad der trockenen Abgasreinigung ist darauf zurückzuführen, daß die einzelnen Calciumhydroxidteilchen nicht vollständig durchreagieren. Auf dem Calciumhydroxid bildet sich eine Schicht aus Reaktionsprodukten, die das weitere Eindringen der abzuscheidenden sauren Schadstoffe verhindert.

Es ist immer wieder versucht worden, den hohen Calciumhydroxidverbrauch zu senken. Ein Verfahren besteht darin, nach der Abgasreinigung das abgeschiedene Produkt, das aus nicht umgesetztem Calciumhydroxid und den gebildeten Reaktionsprodukten besteht, mechanisch durch Mahlen wiederaufzubereiten. Sinn und Zweck des Mahlens besteht darin, die äußeren, nicht reaktionsfähigen Schichten abzutrennen. Ein weiteres Verfahren sieht eine Zwischenlagerung des Reaktionsproduktes vor, wobei nach einer Lagerung von 1 - 2 Tagen ein erneuter Einsatz erfolgt.

Alle diese Verfahren sind jedoch hinsichtlich der Steigerung der Reaktionsfähigkeit von Calciumhydroxid nicht zufriedenstellend.

Unter Steigerung der Reaktionsfähigkeit des Ca(OH)₂ wird dabei die Verringerung der Ca(OH)₂-Menge zur Erreichung eines bestimmten Abscheidegrades der sauren Schadstoffe verstanden. Ein niedriger stöchiometrischer Faktor Ca(OH)₂/saure Schadstoffe bedeutet eine höhere Reaktionsfähigkeit.

Es ist daher die Aufgabe der vorliegenden Erfindung, die Verwendung von Calciumhydroxiden anzugeben, die eine erhöhte Reaktionsfähigkeit gegenüber den sauren Schadstoffen der Abgase aufweisen. Weiterhin sollen die Calciumhydroxide neben den sauren Bestandteilen des Abgases noch weitere Schadstoffe aus dem Abgas abscheiden. Dies sind insbesondere die Stickstoffoxide und die Schwermetalle Quecksilber, Arsen, Antimon und Thallium, die schon im Temperaturbereich von 20°C - 200°C flüchtig sind. Deren Abscheidung aus Abgasen erfolgt nach dem Stand der Technik derart, daß der Abgasstrom möglichst weit abgekühlt wird, so daß es zur Kondensation des Wassers kommt. Dieses Abkühlen erfordert nicht nur eigene Vorrichtungen, sondern auch Energie.

Ein übliches Verfahren, den Quecksilbergehalt des Abgases zu vermindern, besteht darin, die Temperatur des Abgases durch Zugabe von Wasser so weit abzusenken, daß eine Bindung von Quecksilber an Calciumhydroxid erfolgt. Dieses Verfahren hat jedoch den Nachteil, daß nach wie vor deutliche Mengen an Quecksilber im Abgas bleiben und bei unkontrollierten Wasserzugaben Störungen in den nachgeschalteten Abscheidungsvorrichtungen auftreten können.

Die Abscheidung dieser Stoffe sollte dabei nicht in separaten Stufen, sondern einstufig zusammen mit den sauren Schadstoffen erfolgen.

Ein weiteres Problem ist auch die Abscheidung von Kohlenwasserstoffen und chlorierten Kohlenwasserstoffen, wie Dioxinen, Hexachlorbenzol und Pentachlorphenol.

Diese Aufgabe löst die Erfindung durch die in den unabhängigen Patentansprüchen 1 und 2 angegebene Verwendung von feinpulvrigem Calciumhydroxid, das oberflächenaktive Substanzen enthält.

Dabei wird die Verwendung von feinpulvrigem Calciumhydroxid, das die oberflächenaktiven Substanzen Aktivkohle und/oder Braunkohlen-Herdofenkoks enthält, zur Reinigung von Gasen und Abgasen von sauer wirkenden Schadstoffen, Stickstoffoxiden, Kohlenwasserstoffen, chlorierten Kohlenwasserstoffen, wie Dioxinen, Hexachlorbenzol und Pentachlorphenol, und flüchtigen Schwermetallen angegeben, wobei dem Gas- bzw. Abgasstrom feinpulvriges Calciumhydroxid, das die oberflächenaktiven Substanzen enthält, zugesetzt wird, die Reinigung bei einer Temperatur in einem Bereich von 20 bis 400°C durchgeführt wird und das mit Schadstoffen beladene Hydroxid an Staubabscheidevorrichtungen wieder abgeschieden wird.

Außerdem wird die Verwendung von feinpulvrigem Calciumhydroxid, das die oberflächenaktiven Substanzen aktives Aluminiumoxid und/oder Kieselgel enthält, zur Reinigung von Gasen und Abgasen von sauer wirkenden Schadstoffen, Stickstoffoxiden, Kohlenwasserstoffen, chlorierten Kohlenwasserstoffen, wie Dioxinen, Hexachlorbenzol und Pentachlorphenol, und flüchtigen Schwermetallen angegeben, wobei dem Gas- bzw. Abgasstrom feinpulvriges Calciumhydroxid, das die oberflächenaktiven Substanzen enthält, zugesetzt wird, die Reinigung in einem Temperaturbereich von 20 bis 400°C durchgeführt wird und das mit Schadstoffen beladene Hydroxid an Staubabscheidevorrichtungen wieder abgeschieden wird.

Als oberflächenaktive Substanzen kommen bei dem erfindungsgemäß eingesetzten Mittel die Substanzen Aktivkohle, Braunkohlen-Herdofenkoks, aktiviertes Aluminiumoxid und/oder Kieselgel in feiner Verteilung zur Anwendung. Die Wirkung dieser oberflächenaktiven Substanzen besteht darin, aus dem Abgasstrom Restgehalte an organischen Stoffen, insbesondere an chlorierten Kohlenwasserstoffen, wie Dioxinen, Hexachlorbenzol, Pentachlorphenol u. dgl., und an polykondensierten aromatischen Kohlenwasserstoffen, wie Benzo(a)pyren, Dibenz(a,h)anthracen u. dgl., abzuscheiden. Diese Stoffe kommen in Gasen und Abgasströmen im allgemeinen in äußerst geringer Konzentration vor. Deren Abscheidung an herkömmlichen Abscheidevorrichtungen, sei es nun in Wäschern oder an elektrostatischen Abscheidern oder an Gewebefiltern, macht Schwierigkeiten. Bei Einsatz von Calciumhydroxid, das noch oberflächenaktive Substanzen enthält, lassen sich diese Spurenstoffe an die oberflächenaktiven Substanzen binden und damit aus dem Abgasstrom entfernen.

Das eingangs erwähnte Problem der Abscheidung von Schwermetallen wird erfindungsgemäß durch den Einsatz der in den Patentansprüchen genannten Mittel gelöst.

Durch die oberflächenaktiven Substanzen lassen sich die leicht flüchtigen Schwermetalle auch bei Temperaturen von 100 - 200° C binden und abscheiden.

Die oberflächenaktiven Stoffe sind zur Durchführung des erfindungsgemäßen Verfahrens besonders geeignet. Die Aktivkohle eignet sich besonders zur Bindung von organischen Substanzen und auch von Quecksilber. Kieselgel und Aluminiumoxid sind für die Abscheidung von polaren Substanzen, wie oxidierten organischen Verbindungen, und anorganischen Schadstoffen, wie Chlorwasserstoff und Schwefeldioxid, besonders geeignet.

Es ist von besonderem Vorteil, wenn den oberflächenaktiven Substanzen vor dem Löschen des Branntkalks katalytisch wirkende Stoffe, z.B. Vanadin-, Wolfram-, Molybdän-, Mangan-, Eisen-, Nickel-, Kobalt-, Chrom- und/oder Titanverbindungen, zugesetzt werden. Für die Abgasreinigung liegen die katalytisch wirkenden Substanzen dann in großer Oberfläche vor und vermögen ihre Wirksamkeit besonders zu entfalten.

Der Gegenstand der Erfindung ist ein Verfahren zur Reinigung von Gasen und Abgasen von sauer wirkenden Schadstoffen, wie Chlorwasserstoff, Fluorwasserstoff, Schwefeldioxid, Blausäure u. dgl., von Stickstoffoxiden, Kohlenwasserstoffen, chlorierten Kohlenwasserstoffen und flüchtigen Schwermetallen, z.B. Quecksilber, Arsen, Antimon, Cadmium und Thallium, derart, daß dem Gas- bzw. Abgasstrom feinpulvriges Calciumhydroxid zugesetzt wird, das oberflächenaktive Substanzen, wie Aktivkohle, Braunkohlen-Herdofenkoks, Kieselgel und/oder aktives Aluminiumoxid enthält und daß das mit Schadstoffen beladene Hydroxid an Staubabscheidevorrichtungen wieder abgeschieden wird.

Es ist allerdings auch möglich und vorteilhaft, das zu reinigende Gas oder Abgas durch eine feste oder bewegte Schicht aus Ca(OH)₂ zu leiten, das die oben dargelegten weiteren Komponenten enthält.

Zur Menge der einzusetzenden Stoffe ist festzustellen, daß sich diese nach der Menge des abzuscheidenden Schadstoffes richtet.

Bei dem erfindungsgemäß eingesetzten Calciumhydroxid ist die Reaktionsfähigkeit des Ca(OH)₂ deutlich gesteigert, d.h. der Verbrauch an Ca(OH)₂ zur Abscheidung saurer Schadstoffe kann erheblich gesenkt werden. Gleichzeitig lassen sich noch flüchtige Schwermetalle, z.B. Quecksilber, Cadmium u. dgl. aus dem Abgasstrom abscheiden. Ein erheblicher Vorteil ist auch die simultane Abscheidung oder Konzentrationsminderung von sauren Schadstoffen und Stickstoffoxiden, die auch mit einer gleichzeitigen Schwermetallabscheidung verbunden werden kann.

### Beispiel:

28 g Branntkalk wurden mit 15,2 g Wasser, in dem 1,4 g Aktivkohle mit 700 m²/g Oberfläche suspendiert worden waren, gelöscht. Es entstand ein graues Pulver, das gute Fließeigenschaften aufwies.

Über 252 mg dieser Substanz in fester Schicht wurde bei einer Temperatur von 149°C ein Gas geleitet, das die folgenden Inhaltsparameter aufwies:

| | |
|---|---|
| - Feuchte | 0,26 g/l |
| - HCl-Gehalt | 22,5 mg/l |
| - HgCl₂-Gehalt | 1,29 µg/l |

Ingsgesamt wurden 11,2 l des Gases über das modifizierte Ca(OH)₂ geleitet.

Von insgesamt 14,4 µg HgCl₂ wurden 76,5 % an der Aktivkohle absorbiert.

## Patentansprüche

1. Verwendung von feinpulvrigem Calciumhydroxid, das die oberflächenaktiven Substanzen Aktivkohle und/oder Braunkohlenherdofenkoks enthält, zur Reinigung von Gasen und Abgasen von sauer wirkenden Schadstoffen, Stickstoffoxiden, Kohlenwasserstoffen, chlorierten Kohlenwasserstoffen, wie Dioxinen, Hexachlorbenzol und Pentachlorphenol, und flüchtigen Schwermetallen, wobei dem Gas- bzw. Abgasstrom feinpulvriges Calciumhydroxid, das die oberflächenaktiven Substanzen enthält, zugesetzt wird, die Reinigung bei einer Temperatur in einem Bereich von 20 bis 400°C durchgeführt wird und das mit Schadstoffen beladene Hydroxid an Staubabscheidevorrichtungen wieder abgeschieden wird.

2. Verwendung von feinpulvrigem Calciumhydroxid, das die oberflächenaktiven Substanzen aktives Aluminiumoxid und/oder Kieselgel enthält, zur Reinigung von Gasen und Abgasen von sauer wirkenden Schadstoffen, Stickstoffoxiden, Kohlenwasserstoffen, chlorierten Kohlenwasserstoffen, wie Dioxinen, Hexachlorbenzol und Pentachlorphenol, und flüchtigen Schwermetallen, wobei dem Gas- bzw. Abgasstrom feinpulvriges Calciumhydroxid, das die oberflächenaktiven Substanzen enthält, zugesetzt wird, die Reinigung in einem Temperaturbereich von 20 bis 400°C durchgeführt wird und das mit Schadstoffen beladene Hydroxid an Staubabscheidevorrichtungen wieder abgeschieden wird.

3. Verwendung von feinpulvrigem Calciumhydroxid nach einem der Ansprüche 1 oder 2, wobei bei Temperaturen von 100 bis 200°C flüchtige Schwermetalle gebunden und abgeschieden werden.

4. Verwendung von feinpulvrigem Calciumhydroxid nach einem der Ansprüche 1 oder 2, wobei die oberflächenaktiven Substanzen mit Vanadin-, Wolfram-, Chrom-, Molybdän-, Eisen-, Nickel-, Kobalt- und/oder Titanverbindungen beaufschlagt sind.

## Claims

1. Use of finely powdered calcium hydroxide containing activated carbon and/or open hearth lignite coke as surface-active substances for the elimination of acidic pollutants, nitrogen oxides, hydrocarbons, chlorinated hydrocarbons, such as dioxines, hexachlorobenzene and pentachlorophenol, and volatile heavy metals from gases and waste gases, wherein finely powdered calcium hydroxide containing the surface-active substances is added to the gas or waste gas stream, purification is carried out at a temperature in the range of from 20 to 400°C and the hydroxide charged with pollutants is separated at dust separating apparatus.

2. Use of finely powdered calcium hydroxide containing activated aluminium oxide and/or silica gel as surface-active substances for the elimination of acidic pollutants, nitrogen oxides, hydrocarbons, chlorinated hydrocarbons, such as dioxines, hexachlorobenzene and pentachlorophenol and volatile heavy metals from gases and waste gases, wherein finely powdered calcium hydroxide containing the surface-active substances is added to the gas or waste gas stream, purification is carried out at a temperature in the range of from 20 to 400°C and the hydroxide charged with pollutants is separated at dust separating apparatus.

3. Use of finely powdered calcium hydroxide according to any one of claims 1 or 2, wherein volatile heavy metals are bound and separated at temperatures between 100 and 200°C.

4. Use of finely powdered calcium hydroxide according to any one of claims 1 or 2, wherein the surface-active substances are charged with vanadium, tungsten, chromium, molybdenum, iron, nickel, cobalt and/or titanium compounds.

## Revendications

1. Mise en oeuvre d'hydroxyde de calcium finement pulvérulent, qui contient comme substances tensio-actives du charbon actif et/ou du coke de four Martin à lignite, pour séparer des gaz et gaz d'échappement les substances nocives acides les oxydes d'azote, les hydrocarbures les hydrocarbures chlorés tels que les dioxynes l'hexachlorobenzol et le pentachlorophénol ainsi que les métaux lourds volatils, de l'hydroxyde de calcium finement pulvérulent qui contient les substances tensio-actives, étant ajouté au courant de gaz ou de gaz d'échappement, l'épuration s'effectuant à une température comprise entre 20 et 400 °C et l'hydroxyde chargé de substances nocives étant à nouveau séparé dans des séparateurs de poussières.

2. Mise en oeuvre d'hydroxyde de calcium finement pulvérulent, qui contient comme substances tensio-actives de l'oxyde d'aluminium actif et/du gel de silice pour séparer des gaz et gaz d'échappement les substances nocives acides les oxydes d'azote les hydrocarbures les hydrocarbures chlorés tels que les dioxynes, l'hexachlorobenzole et le pentachlorophénol ainsi que les métaux lourds volatils, de l'hydroxyde de calcium finement pulvérulent qui contient des substances tensio-actives, étant ajouté au courant de gaz ou de gaz d'échappement, l'épuration s'effectuant à une température comprise entre 20 et 400 °C et l'hydroxyde chargé de substances nocives étant à nouveau séparé dans des séparateurs de poussières.

3. Mise en oeuvre d'hydroxyde de calcium finement pulvérulent selon l'une des revendications 1 ou 2, les métaux lourds volatils étant liés et séparés à des températures comprises entre 100 et 200 °C.

4. Mise en oeuvre d'hydroxyde de calcium finement pulvérulent selon l'une des revendications 1 ou 2, les substances tensio-actives recevant des composés de vanadium, de tungstène, de chrome, de molybdène, de fer, de nickel, et de cobalt et/ou de titane.
